# EUROPEAN PATENT APPLICATION

(11) **EP 4 672 444 A1**
(43) Date of publication of application: **31.12.2025**
(21) Application number: 24815931.1
(22) Date of filing: 31.05.2024
(51) Int. Cl.: H01M 50/145, H01M 50/167, H01M 50/107

(54) **PRINTING METHOD FOR PREVENTING CORROSION, AND BATTERY CELL MANUFACTURED USING SAME**

(30) Priority: 02.06.2023 KR 20230071738; 28.05.2024 KR 20240069566
(71) Applicant: LG Energy Solution, Ltd., Seoul 07335 (KR)
(72) Inventor: PARK, Jeongho, Daejeon 34122 (KR); KWON, Yonghwan, Daejeon 34122 (KR); HWANG, Dongsung, Daejeon 34122 (KR); CHO, Sungmin, Daejeon 34122 (KR); HONG, Taerim, Daejeon 34122 (KR)
(74) Representative: Goddar, Heinz J.
(86) International application number: PCT/KR2024/007531
(87) International publication number: WO 2024/248557

(57) **Abstract**

The present invention provides a method for printing a coating material for corrosion prevention and a battery cell manufactured using the same. According to the method, a coating material may be locally printed on a minimum area where a coating for corrosion prevention is required at the front end of a crimped portion of a battery can having a fractured surface. The coating material is a thermosetting resin or a thermosetting sealant, and may be cured by the heat of a subsequent cell activation process without a separate curing process. The coating material may be printed on the front end of the crimped portion by reverse-transcribing (printing) onto the local area a coating material having a predetermined pattern transcribed on the surface of a flexible pad.

## Description

### [TECHNICAL FIELD]

This application claims the benefit of priority based on Korean Patent Application No. 10-2023-0071738 filed on June 2, 2023, and Korean Patent Application No. 10-2024-0069566 filed on May 28, 2024, entire contents disclosed in the document of the patent applications is included as a part of this specification.

The present invention relates to a method for printing a coating material for corrosion prevention and a battery cell manufactured using the same.

### [BACKGROUND ART]

A cylindrical battery cell is a structure wherein a jelly-roll-shaped electrode assembly is accommodated in a cylindrical metal can, and is more robust to shock and temperature than a pouch-type battery. Accordingly, demand for using a can-shaped cell as a battery cell applied to a battery pack for vehicles is increasing.

In the process of manufacturing a cylindrical battery can, a metal sheet is subjected to deep drawing to form a circular end wall and a circular tube-shaped side wall connected thereto, and then the manufacturing is finished by cutting off the front end of the side wall to meet the required dimensions.

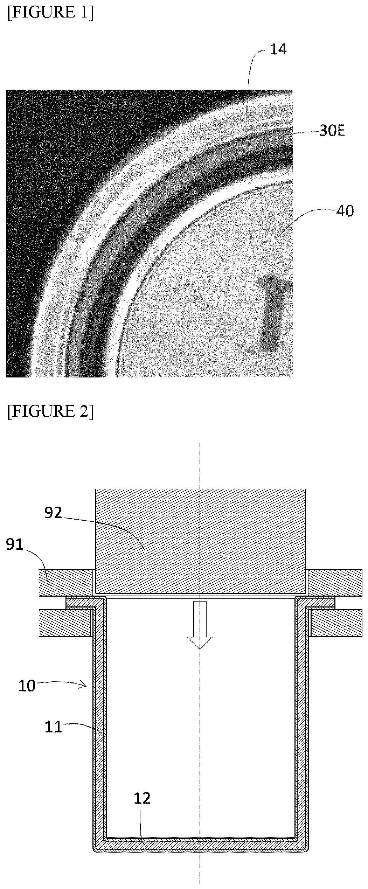

Usually, the base material used when forming a battery can is a metal plate with anti-rust plating thereon. However, when the front end of the side wall is fractured to meet the dimensions as described above, the internal metal without the anti-rust plating is exposed. In this way, the side wall having a front end where the internal metal is exposed due to the fracture is exposed from of the battery can even after the crimped portion process. As a result, the exposed area is rusted as shown in FIG. 1, and the rust continues to grow, which may adversely affect the stability of the battery.

However, when the fractured surface where the steel material is exposed is re-plated, there is a problem of the thickness of the additional plating area being different from other areas as well as the increased work time and cost.

Meanwhile, chemical treatment may be considered as an anti-rust treatment for the relevant area. However, chemical treatment is difficult to apply locally only to the front end of crimped portion.

In addition, impregnation or spraying may be considered. However, this involves a water washing and drying process, which increases the number of processes and process costs. Furthermore, due to the shape of the anti-rust area, there is a possibility that stains may occur in the anti-rust area, which may cause an issue of defective appearance, and there is a concern that the anti-rust area may act as a factor that interferes with welding.

As a physical anti-rust treatment method for the relevant area, a method of dispensing sealant along the circumference of the front end of the crimped portion, or a method of depositing or spraying the front end of the crimped portion through a separate masking process may be considered.

However, the method of dispensing sealant using a nozzle has the problem of slow process speed, and it is difficult to apply masking to the front end of the crimped portion having a three-dimensional surface profile in the selective application method using masking is unreasonable in terms of process speed and cost.

### [DETAILED DESCRIPTION OF THE INVENTION]

### [TECHNICAL PROBLEM]

In order to solve above-described problems, it is an object of the present invention to provide a printing structure of a coating material and a battery cell employing the same capable of preventing rust on the fractured surface of the can by preventing the exposure of the fractured surface of the can during the process of fixing the cap to the battery can.

It is an object of the present invention to provide a printing structure of a coating material and a battery cell employing the same capable of protecting the cross-section of a battery can from corrosion by printing the coating material without adding a separate process.

In addition, it is an object of the present invention to provide a printing structure of a coating material and a battery cell employing the same capable of protecting the cross-section of a can by printing the coating material only on a minimum area for protecting the cross-section of the can such that the coating material does not interfere with welding of a bus bar to an electrode terminal of a battery cell.

In addition, it is an object of the present invention to provide a battery cell having a structure capable of preventing damage to a printed coating material in a battery cell usage environment.

In addition, it is an object of the present invention to provide a battery cell capable of increasing energy density by allowing the crimped portion with the coating material printed thereon to define the axial dimension of the form factor of the battery cell.

In addition, it is an object of the present invention to provide a battery cell having a structure capable of facilitating printing of the coating material.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a battery cell including: a battery can; an electrode assembly accommodated in the battery can; and a cap covering an opening of the battery can.

The battery can may include metal.

The battery can includes a side wall surrounding an imaginary axis at the center and extending along the lengthwise direction of the axis.

The battery can further includes an end wall connected to a first lengthwise end of the side wall extending in the axial direction.

The end wall extends in a direction intersecting the axial direction.

The opening of the battery can is provided at a second lengthwise end of the side wall opposite to the first lengthwise end.

Accordingly, a front end surface is provided at the second lengthwise end of the side wall.

The battery can may be manufactured by subjecting a plate having a corrosion-resistant material coated on the surface thereof to a plastic processing.

The end wall and the side wall of the battery can may be formed by subjecting the metal plate to deep drawing in the axial direction while holding the outer periphery of the metal plate. The front end of the side wall, which was the outer peripheral portion of the metal plate subjected to deep drawing, may be trimmed with a punch.

The fractured surface formed by the trimming may define the front end surface. Accordingly, the front end surface may be provided at the second lengthwise end of the side wall.

The inner material of the metal plate under the coating may be exposed without the coating in at least a portion of the front end surface of the side wall.

The electrode assembly includes a first electrode and a second electrode having different polarities.

The first electrode and the second electrode may have an active material coated on one or both surfaces of a metal foil constituting a current collector.

The first electrode and the second electrode may be stacked with a separator interposed therebetween. Such laminate may be assembled into a jelly-roll form wound around a predetermined winding axis.

An electrode tab of the first electrode and an electrode tab of the second electrode may be arranged at a first axial end and a second axial end of the electrode assembly facing each other, respectively.

The side wall and the end wall of the battery can may define an internal space of the battery can.

The electrode assembly may be accommodated in the internal space of the battery can.

A crimped portion formed by bending a predetermined axial section of the side wall radially inward is provided at the second lengthwise end of the side wall.

Accordingly, the front end surface provided at the second lengthwise end of the side wall is disposed at the radially inner edge of the crimped portion.

The crimped portion presses an edge of an axially outer side surface of the cap axially inward.

The battery cell may further include a gasket interposed between the crimped portion and the cap. By the gasket, the portion where the crimped portion and the cap face each other may be sealed. By the gasket, the crimped portion and the cap may be electrically insulated from each other.

The gasket may be provided with an exposed portion extending radially inner than a front end surface of the crimped portion.

The battery cell may further include a first electrode terminal and a second electrode terminal electrically connected to the first electrode and the second electrode of the electrode assembly, respectively.

The first electrode terminal may be installed in the battery can so as to be electrically insulated from the second electrode terminal.

The first electrode terminal may be installed at the end wall so as to penetrate the end wall in the axial direction.

The first electrode terminal may be arranged at the center of the end wall.

The second electrode terminal may be provided at the battery can.

The second electrode terminal may be defined by at least the end wall of the battery can.

The second electrode terminal may be defined by the end wall and the side wall.

The end wall and the side wall may be electrified with the second electrode of the electrode assembly.

The front end surface provided at the crimped portion is covered with a coating material. The front end surface of the side wall may be protected against corrosion by the coating material.

In one embodiment, the coating material may be a resin.

In one embodiment, the coating material may include a thermosetting resin or a thermosetting sealant.

Preferably, the coating material may include a silicone-based polymer containing a siloxane including a cross-linking agent.

The coating material may include a polymer or/and copolymer including at least one of epoxy, acrylic, imide and urethane.

The coating material may include a combination of the polymers or/and copolymers.

In one embodiment, the coating material may include a resin based on a cross linking agent formulation for rapid curing and photocuring initiation cross linking agent using ultraviolet rays and compositions thereof.

The crimped portion defines an annular supporting surface protruding axially outer than the axially outer side surface of the cap.

The supporting surface may face axially outward. The supporting surface may define an axial dimension of the form factor of the battery cell.

The bent outer circumferential surface of the predetermined axial section of the side wall defines a front end outer circumferential surface of the crimped portion.

The front end outer circumferential surface of the crimped portion may be inclined to extend axially inward from the supporting surface.

The supporting surface may protrude axially outer than the coating material.

The corner where the front end surface and the front end outer circumferential surface meet defines a front end centrifugal corner.

The corner where the front end surface and the inner circumferential surface of the predetermined section of the side wall meet defines a front end centripetal corner.

The front end centrifugal corner may be disposed at a position to protrude axially outer than the axially outer side surface of the cap. Accordingly, the coating material may be printed radially inward and outward with respect to the front end centrifugal corner during the coating material printing process.

The exposed portion of the gasket may be disposed axially inner and radially inner than the front end outer circumferential surface of the side wall disposed at the crimped portion.

The edge of the axially outer side surface of the cap, which is not covered by the gasket, may be disposed axially inner and radially inner than the exposed portion of the gasket.

The coating material may further cover the front end centrifugal corner and the first section of the front end outer circumferential surface extending from the front end centrifugal corner in the lengthwise direction.

The coating material may further cover the front end centripetal corner and the second section of the exposed portion of the gasket extending radially inward from the front end centripetal corner.

The coating material may be printed on the cover region. The printing may be performed in a transcription or reverse transcription process.

The present invention further provides a manufacturing method of the battery cell.

An electrolyte may be injected into the battery can of the battery cell and the electrode assembly may be impregnated with the electrolyte.

The manufacturing method includes a transcription step of transcribing a coating material having a pattern corresponding to a front end surface 11A onto a surface of a flexible pad; and a reverse transcription step of reversely transcribing the coating material transcribed on the surface of the flexible pad onto the front end surface.

In one embodiment, the flexible pad may have a plate shape.

In another embodiment, the flexible pad may have a convex surface such that a center thereof protrudes more than an edge thereof.

In the reverse transcription step, the center of the flexible pad may be disposed against an axially outer side surface of the cap such that the flexible pad 80 may be pressed axially inward to elastically deform the flexible pad.

Through elastic deformation of the flexible pad, a portion of the coating material transcribed on the surface of the flexible pad may reach the front end surface.

The coating material may include a thermosetting resin or a thermosetting sealant.

The manufacturing method may further include an activation process step of applying heat to the battery cell after the reverse transcribing step.

### [ADVANTAGEOUS EFFECTS]

According to the present invention, since the portion of the metal plate exposed through the fractured surface provided at the front end of the battery can and vulnerable to corrosion is protected by the coating material, the corrosion resistance and rust prevention of the battery cell may be improved.

According to the present invention, since only the minimum area of the front end area of the battery can necessary for corrosion prevention and vulnerable to corrosion is covered with the coating material, the coating material does not interfere with the subsequent process of the battery cell.

According to the present invention, since at least a portion of the crimped portion requiring printing of the coating material protrudes axially outer than the cap fixed by the crimped portion, the energy density of the battery cell may be increased, and it is possible to coat the coating material on the front end surface by printing. Therefore, unlike the method of painting the coating material with a spray or brush or pasting the coating material through a nozzle, the printing of the coating material is possible without increasing the manufacturing time such that the process speed and cost are very reasonable.

According to the present invention, since the crimped portion is inclined so as to face axially inward toward radially inward, the coating material covering the front end surface of the side wall at the radially inner end of the crimped portion may be placed relatively axially inner than the radially outer end of the crimped portion.

According to the present invention, the coating material includes a component that is cured by heat, and the activation process of the battery cell is performed after the printing process of the coating material, and since the coating material is cured by the heat applied to the battery cell for activation in the activation process, the printing of the coating material is possible without adding a separate process for curing the coating material such that the process speed and cost are very reasonable.

In addition to the advantageous effects described above, specific effects of the present invention will be described further while describing specific details of the present invention.

### [BRIEF DESCRIPTION OF DRAWINGS]

FIG. 1 is a photograph illustrating a crimped portion of a battery cell manufactured using a battery can where corrosion has occurred.
FIG. 2 is a cross-sectional view illustrating a portion of a manufacturing process of the battery can.
FIG. 3 is an enlarged view illustrating the battery can and an open end thereof after trimming in the manufacturing process of FIG. 2.
FIG. 4 is an exploded perspective view of an electrode assembly before winding.
FIG. 5 is a perspective view of the electrode assembly of FIG. 4 in a laminated state before winding.
FIG. 6 is a perspective view of a jelly-roll-shaped cylindrical electrode assembly assembled by winding the laminate of FIG. 5.
FIG. 7 is an exploded perspective view of a battery cell to which the coating material printing method according to the embodiment may be applied.
FIG. 8 is a cross-sectional perspective view of the exploded form of the battery cell illustrated in FIG. 7 viewed from a different angle.
FIG. 9 is a cross-sectional view of the assembled battery cells illustrated in FIGS. 7 and 8.
FIG. 10 is an enlarged view of a crimped portion of the battery cell of FIG. 9.
FIG. 11 is a cross-sectional view illustrating the crimped portion of the battery cell of FIG. 10 with the coating material is printed thereon.
FIG. 12 illustrates a process of preparing a coating material of a desired pattern through doctor blading.
FIG. 13 illustrates a process of preparing a coating material of a desired pattern through gravure printing.
FIG. 14 illustrates a process of transcribing a coating material in a desired pattern onto a flexible pad.
FIG. 15 illustrates a process of reversely transcribing a coating material to a predetermined area of a battery can of a battery cell using a flexible pad where corrosion resistance improvement is required.
FIG. 16 is a flow chart illustrating a manufacturing method of a battery cell according to the present invention.

**[DESCRIPTION OF REFERENCE NUMERALS]**

| | | | |
|---|---|---|---|
| 10: | battery can (second electrode terminal) | 10St: | metal plate |
| 10Ni: | coated portion | 11: | side wall |
| 11A: | front end surface | 11B: | front end outer circumferential surface |
| J: | first section | 11C: | front end centrifugal corner |
| 11D: | front end centripetal corner | 11F: | supporting surface |
| 12: | end wall | 13: | beading |
| 14: | crimped portion | 15: | rivet terminal (first electrode terminal) |
| 16: | terminal gasket | 19: | insulator |
| 20: | electrode assembly | 21: | first electrode (anode) |
| 22: | second electrode (cathode) | 23: | metal foil |
| 24: | active material layer | 25: | coated portion |
| 26: | non-coated portion | 27: | electrode tab (notched tab) |
| 28: | separator | 30: | gasket |
| 30 E: | exposed portion | K: | second section |
| 31: | anode collecting plate | 32: | cathode collecting plate |
| 40: | cap | L: | edge |
| 50: | coating material | 61: | transcription plate |
| 62: | patterned groove | 63: | blade |
| 71: | gravure roll | 72: | patterned groove |
| 73: | transcription plate | 80: | flexible pad |
| 91: | blank holder | 92: | punch |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

The widthwise direction of an unwound electrode assembly corresponds to the axial direction of the jelly-roll. The lengthwise direction of the unwound electrode assembly corresponds to the circumferential direction of the jelly-roll.

Hereinafter, with reference to FIGS. 2 to 11, an assembly process and structure of a cylindrical battery cell according to an embodiment of the present invention will be described.

The battery cell according to the embodiment includes: a battery can 10 provided with a side wall 11 extending in the axial direction (refer to the dashed-dotted line in FIG. 2); an end wall 12 connected to the first axial end of the side wall 11; and an open end provided at the second axial end of the side wall 11.

The battery can 10 has a structure in which corrosion-resistant coated portions 10Ni are coated on both surfaces of a metal sheet 10St.

Referring to FIG. 2, the battery can 10 is manufactured by subjecting a metal plate 10St to deep drawing to form the circular end wall 12 and the circular tubular side wall 11 connected thereto, and holding the front end of the side wall 11 with a blank holder 91 and trimming the same with a punch 92.

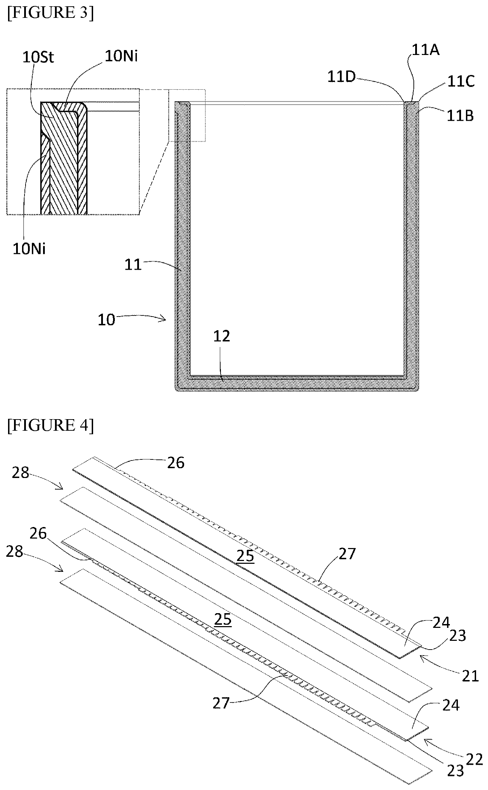

Accordingly, at least a portion of the front end surface 11A of the side wall 11 may be a fractured surface as illustrated in FIG. 3. Accordingly, the metal plate 10St may be exposed in at least a portion of the front end surface 11A of the side wall 11 without the coated portion 10Ni.

At the front end of the side wall 11, the portion where the front end surface of the side wall 11 and the inner circumferential surface of the side wall meet defines the front end centripetal corner 11D, and the portion where the front end surface of the side wall 11 and the outer circumferential surface of the side wall meet defines the front end centrifugal corner 11C.

According to the embodiment, the metal sheet 10St is exposed in some sections of the front end surface 11A of the side wall 11, the front end centrifugal corner 11C, and the front end outer circumferential surface 10B connected to the front end centrifugal corner 11C.

Apparently, the material of the battery can 10 is not limited thereto.

The battery cell according to the embodiment is provided with an electrode assembly 20 in the form of a jelly-roll accommodated in the battery can 10.

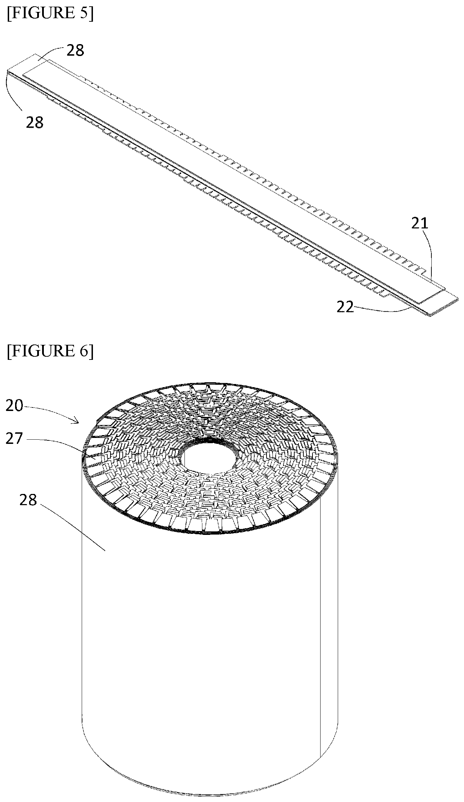

The electrode assembly 20 is manufactured by preparing a first electrode 21, a second electrode 22, and a separator 28 that have a predetermined width and extend in a lengthwise direction as shown in FIG. 4, and forming a laminate by sequentially stacking the first electrode 21, the separator 28, the second electrode 22, and the separator 28 as shown in FIG. 5, and winding the laminate into a jelly-roll form around a core shaft as shown in FIG. 6.

The first electrode 21 may be an anode, and the second electrode 22 may be a cathode, or vice versa.

The first electrode 21 and the second electrode 22 are manufactured in the form of sheets. The electrode sheet is manufactured by applying an active material layer 24 to the surface of a metal foil 23. The electrode sheet has a coated portion 25 where the active material layer 24 is applied, and a non-coated portion 26 without the active material layer 24. The anode sheet has a non-coated portion 26 at first widthwise end thereof, and the cathode sheet has a non-coated portion 26 at a second widthwise end thereof.

The first electrode 21 and the second electrode 22 are laminated such that non-coated portions 26 thereof are exposed or protrude in the widthwise direction from the laminate. The non-coated portion 26 of the first electrode 21 protrudes from the first axial end of the wound jelly-roll, and the non-coated portion 26 of the second electrode 21 protrudes from the opposite second axial end of the jelly-roll. The non-coated portion 26 itself functions as at least one electrode tab 27.

The non-coated portion 26 may be provided with notches at a predetermined interval to form notched tabs 27 in the shape of a flag.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs may be gradually or stepwisely increased from the core toward the outer circumference.

In addition, as shown in FIGS. 4 and 5, the notched tabs 27 with gradually increasing height from the core toward the outer circumference are exemplified. However, in contrast, the height of the notched tabs may be a constant or may gradually decrease.

In addition, in the embodiment, exemplified is a structure with notched tabs 27 removed from predetermined sections of the centripetal end and the centrifugal end of the non-coated portion 26. However, in contrast, it is also apparent that the notched tabs are not removed from the centripetal end of the non-coated portion, the notched tabs are not removed from the centrifugal end of the non-coated portion, and the notched tabs are not removed from both of the centripetal and centrifugal ends of the non-coated portion.

In the jelly-roll type electrode assembly 20, the notched tab 27 may be bent in the radial direction and flattened as shown in FIG. 6. The notched tab 27 may be bent radially inward or radially outward. In the embodiment, exemplified is a structure with the notched tabs 27 bent radially inward.

The notched tabs 27 may be bent one by one during the process of forming the jelly-roll type electrode assembly 20 by winding the laminate. Alternatively, the notched tabs 27 may be bent all at once after the jelly-roll type electrode assembly is formed by winding the laminate.

The notched tabs 27 of the first electrode 21 and the notched tabs 27 of the second electrode 22 that are folded and overlapped in the radial direction may provide a plane substantially perpendicular to the axial direction at two axial ends of the electrode assembly 20, respectively.

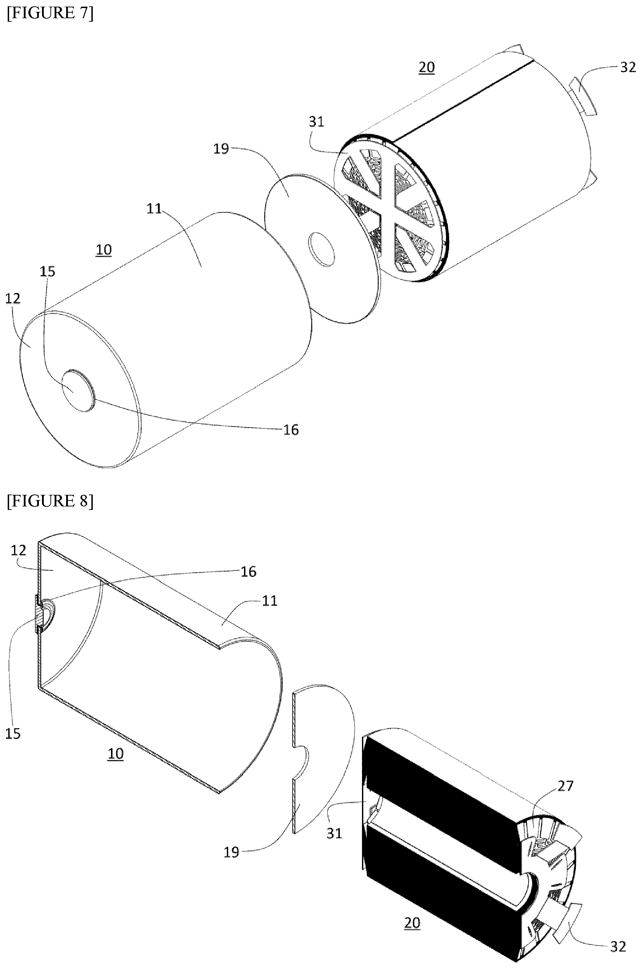

As shown in FIG. 7 and FIG. 8, the first current collecting plate 31 and the second current collecting plate 32 may be bonded to the substantially flat surface provided by the notched tabs 27 exposed at the two axial ends of the electrode assembly 20.

In the embodiment, the first current collecting plate 31 is an anode collecting plate, and the second current collecting plate 32 is a cathode collecting plate. The first current collecting plate 31 may include aluminum, and the second current collecting plate 32 may include copper.

The collecting plates 31 and 32 may be manufactured by punching, trimming, piercing and bending a metal sheet.

The electrode assembly is accommodated in the battery can 10 through the open end of the battery can 10 as shown in FIGS. 7 and 8.

The end wall 12 of the battery can 10 may have a disk shape with a hole at the center thereof, and the side wall 11 may have a circular tube shape surrounding the internal volume of the battery can 10.

The first electrode terminal 15 may be fitted into the hole. The first electrode terminal 15 may be fixed to the end wall 12 by riveting with a terminal gasket 16 interposed therebetween. The terminal gasket 16 may be interposed between the first electrode terminal 15 and the end wall 12 to seal the battery can 10 to prevent leakage of electrolyte, and to electrically insulate the first electrode terminal 15 from the end wall 12.

However, the connection method of the first electrode terminal 15 and the end wall 12 is not limited thereto. For example, as long as the structure is capable of sealing between the first electrode terminal 15 and the end wall 12 and electrically insulating the first electrode terminal 15 and the end wall 12, various other fixing methods such as: i) bolt-nut coupling scheme; ii) glass seal scheme; or iii) chrome coating & PP-MAH thermal bonding scheme may also be applied.

The first electrode terminal 15 may have a first polarity, and the battery can 10 may have a second polarity. That is, the end wall 12 of the battery can 10 and the side wall 11 connected thereto may both have second polarity.

Accordingly, the battery cell may have both the first electrode terminal 15 and the second electrode terminal arranged at the axial end, i.e., the closed end where the end wall 12 is provided. As a result, the battery cell may have both the bus bar connected to the first electrode terminal 15 and the bus bar connected to the second electrode terminal disposed at one (upper) side of the battery cell.

In one embodiment, the first electrode terminal 15 may be an anode terminal, and the second electrode terminal may be a cathode terminal, or vice versa.

As illustrated in FIGS. 7 to 9, the electrode assembly 20 is accommodated in the battery can 10 with the first collecting plate 31 aligned toward the end wall 12 of the can 10. Here, an insulator 19 is interposed between the first collecting plate 31 and the end wall 12 of the can 10 such that the first collecting plate 31 is electrically insulated from the end wall 12.

Thereafter, the center of the first collecting plate 31 is bonded to the first electrode terminal 15 fixed to the battery can 10 by resistance welding, ultrasonic welding, laser welding, etc. The welding device for welding the first collecting plate 31 and the first electrode terminal 15 may access the back surface of the center of the first collecting plate 31 (the surface facing the electrode assembly 20) through the core cavity of the electrode assembly 20 from the open end of the battery can 10 to perform welding. Apparently, the first collecting plate 31 and the first electrode terminal 15 may also be bonded by brazing or soldering, etc. That is, as long as the first collecting plate 31 and the first electrode terminal 15 are electrically connected and mutually fixed, various methods may be applied.

When the electrode assembly 20 is accommodated in the battery can 10, the electrode tab 27 of the second electrode 22 and the second collecting plate 32 may be arranged to face the open end of the side wall 11.

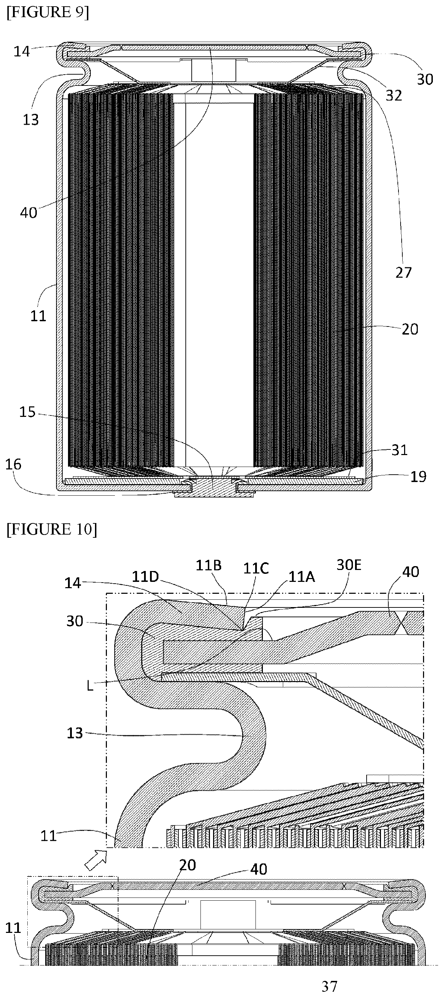

Referring to FIG. 9, after accommodating the electrode assembly 20 in the battery can 10, the side wall 11 is plastically processed to concave radially inward from the axially outer side of the electrode assembly 20 to form a beading 13. The beading 13 supports the electrode assembly 20 accommodated in the battery can 10 in the axial direction, and also supports the inner surface of the edge of the later described cap 40, which covers the open end of the battery can 10 in the axial direction.

The edge of the second collecting plate 32 is placed on the beading 13 and bonded by welding, etc. Accordingly, the battery can 10 and the second collecting plate 32 are electrically connected.

After the first collecting plate 31 and the first electrode terminal 15 are bonded and the second collecting plate 32 and the beading 13 are bonded, electrolyte may be injected into the can 10. After the electrolyte is injected, the open end of the side wall member 11 may be covered and finished by a cap 40 as shown in FIGS. 9 to 11.

The battery cell according to the embodiment is provided with a cap 40 that covers the open end of the battery can 10. The cap 40 covers at the open end of the battery can 10 with a gasket 30 surrounding the edge thereof.

The second axial end of the side wall 10 is bent radially inward from the axially outer side of the cap 40 to form a crimped portion 14. The crimped portion 14 presses the edge of the outer surface of the cap 40 axially inward.

The bent outer circumferential surface of the predetermined axial section of the side wall 11 defines a front end outer circumferential surface 11B of the crimped portion. In addition, the front end surface 11A of the side wall 11 before bending may be arranged at the radially inner end of the crimped portion 14 after bending.

The gasket 30 surrounds the axially inner surface, the radially outer circumferential surface and the axially outer surface of the edge of the cap 40 and is pressed by and interposed between the cap 40 and the side wall 11, thereby sealing the battery can 10. The gasket 30 seals the gap between the crimped portion 14 and the cap 40, and electrically insulates the cap 40 from the side wall 11.

The gasket 30 has an exposed portion 30E extending radially inner than the front end centripetal corner 11D of the side wall 11. In addition, the front end centripetal corner 11D of the side wall 11 presses and fixes the gasket 30.

The exposed portion 30E of the gasket 30 is arranged radially and axially inner than the front end outer circumferential surface 10B of the side wall 11 that is arranged at the crimped portion 14. In addition, the edge L of the surface of the cap 40 not covered by the gasket 30 is arranged radially and axially inner than the exposed portion 30E of the gasket 30. That is, the cross-sectional shape of the surface of the crimped portion 14 and the gasket 30 and the cap 40 may form a predetermined step shape as shown in FIG. 10.

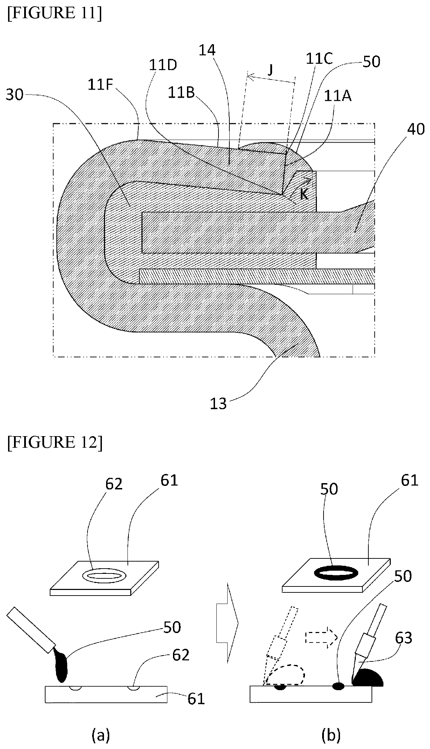

Referring to FIG. 11, the crimped portion 14 includes an annular supporting surface 11F disposed axially outer than the axially outer side surface of the cap 40. The supporting surface 11F may face axially outward. The supporting surface 11F may define the axial dimension of the form factor of the battery cell.

The battery cell according to the embodiment may be, for example, a cylindrical battery cell having a form factor ratio (defined as the diameter of the cylindrical battery cell divided by the height, i.e., the ratio of the diameter to the height) of approximately 0.4 or greater.

Here, the form factor refers to values representing the diameter and the height of a cylindrical battery cell. The cylindrical battery cell may be, for example, a 46110 cell, a 48750 cell, a 48110 cell, a 48800 cell, a 46800 cell or a 46950 cell. In the values representing the form factor, the first two numbers represent the diameter of the cell, the next two numbers represent the height of the cell, and the last number 0 represents that the cross-section of the cell is circular.

The battery cell may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately 110 mm and a form factor ratio of 0.418.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

Hereinafter, an embodiment in which a coating material is applied to a battery cell of the embodiment will be described.

Referring to FIGS. 9 to 11, the front end outer circumferential surface 11B of the crimped portion 14 may be inclined to extend axially inward from the supporting surface 11F toward radially inward side. Preferably, the front end centrifugal corner 11C may be arranged axially outer than the axially outer side surface of the cap 40.

The front end surface 11A provided at the crimped portion 14 is covered with a coating material 50. The front end surface 11A of the side wall 11 may be anti-rust due to the coating material 50. The coating material 50 may be a resin.

In one embodiment, the coating material 50 may include a thermosetting resin or a thermosetting sealant.

Preferably, the coating material 50 may be a resin including silicone polymer containing siloxanes with cross linking agent and epoxy, acrylic, imide, urethane polymer and copolymers thereof and combinations thereof.

In another example, the coating material may include a resin based on a cross linking agent formulation for rapid curing and photocuring initiation cross linking agent using ultraviolet rays and compositions thereof.

The supporting surface 11F may protrude axially outer than the coating material 50.

As shown in FIG. 11, the front end of the side wall 11 where the fractured portion is located is covered with the coating material 50.

The coating material 50 covers the front end surface 11A of the side wall 11 exposed at the radially inner edge of the crimped portion 14.

The coating material 50 further covers the front end centrifugal corner 11C.

The coating material 50 further covers a first section J of the front end outer circumferential surface 11B extending from the front end centrifugal corner 11C in the extending direction of the side wall 11, i.e., radially outward.

It is preferable that the surface tension of the coating material 50 is sufficiently high such that the first section J may be formed as short as possible. When the first section J is formed short, it is advantageous for securing selectivity and weldability.

The coating material 50 further covers a second section K of the exposed portion 30E of the gasket 30 extending radially inward from the front end centripetal corner 11D of the side wall 11.

The coating material 50 may be printed on the cover region including the sections J and K. The printing may be performed by transcription or reverse transcription.

Hereinafter, a coating method of the coating material 50 will be described with reference to FIGS. 12 to 16.

The coating method includes: a transcription step of transcribing a coating material 50 having a pattern corresponding to a front end surface 11A onto a surface of a flexible pad 80; and a reverse transcription step of reversely transcribing the coating material 50 transcribed on the surface of the flexible pad 80 onto the front end surface 11A of the crimped portion 14.

In the transcription step, the coating material 50 having the pattern corresponding to the inner circumference of the front end of the crimped portion 14 is prepared first. The pattern may have a ring shape having a diameter corresponding to the diameter of the front end of the crimped portion 14.

Referring to FIG. 12, the coating material 50 is applied to a flat plate-shaped transcription plate 61 having a patterned groove 62 with the pattern formed on the surface, and the coating material 50 having the shape of the pattern may be prepared through doctor blading by shaving off the surface with a blade 63.

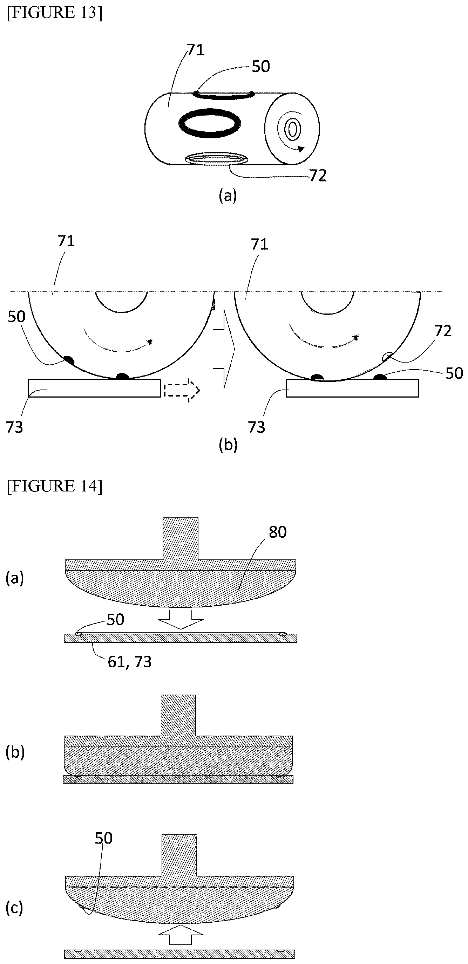

Referring to FIG. 13, the coating material 50 having the shape of the pattern may also be prepared through roll-type gravure printing. That is, the coating material 50 having the shape of the pattern may be prepared by transcribing the coating material 50 having the shape of the pattern formed by the gravure roll 71 with the patterned groove 72 formed on the outer circumferential surface thereof onto the flat shaped transcription plate 73.

Thereafter, as shown in FIG. 14, the coating material 50 prepared on the transcription plates 61 and 73 is transcribed onto the surface of the flexible pad 80 having a convex hemispherical curve. The flexible pad 80 may be, for example, made of silicone. The surface of the flexible pad 80 is elastically deformed and spread flat to correspond to the surface of the transcription plates 61 and 73, and in the process, the coating material 50 is transcribed onto the surface of the flexible pad 80.

Referring to (a) of FIG. 14, the diameter of the coating material 50 patterned on the transcription plate substantially corresponds to the inner diameter of the front end surface 11A of the crimped portion 14. However, when the flexible pad 80 is elastically restored as shown in (c) of FIG. 14 after the surface of the flexible pad 80 is spread flat and the coating material 50 is transferred as shown in (b) of FIG. 14, the diameter of the pattern of the coating material 50 may be somewhat reduced.

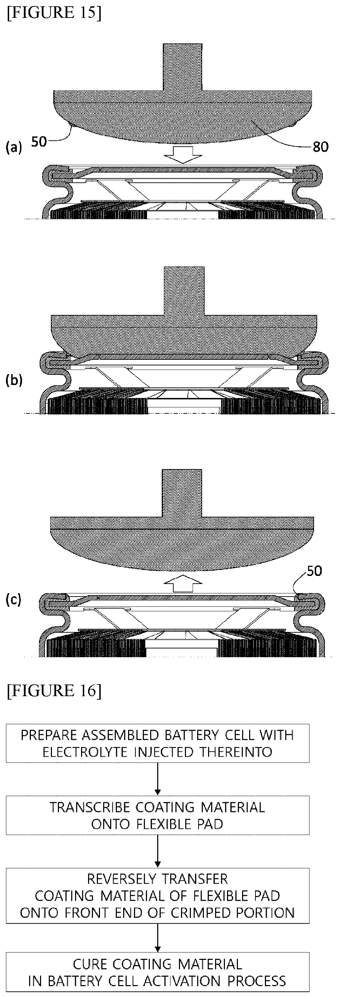

Next, in the reverse transcription step, as shown in FIG. 15, when the flexible pad 80 with the coating material 50 transcribed thereon is brought into contact with the second axial end of the battery can 10, the coating material 50 is reversely transcribed (printed) from the surface of the flexible pad 80 onto the radially inner end of the crimped portion 14.

Here, as shown in (b) of FIG. 15, the center of the flexible pad 80 is first placed against the center of the axially outer side surface of the cap 40, and the flexible pad 80 is pressed axially inward to elastically deform the flexible pad 80 flat. As a result, the flexible pad 80 is elastically deformed such that the diameter of the pattern of the coating material 50 is slightly expanded again. Thereafter, the flexible pad 80 reaches the front end surface 11A of the crimped portion 14. Accordingly, the coating material 50 transferred onto the surface of the flexible pad 80 is reversely transcribed to be printed on a predetermined cover region including the front end surface 11A of the crimped portion 14 as shown in (c) of FIG. 15.

Preferably, the coating material 50 may be a thermosetting resin or a thermosetting sealant. Accordingly, the coating material 50 may be cured by the heat applied to the battery cell for activation in the subsequent battery cell activation process. That is, a separate curing process for hardening the coating material 50 may not be necessarily performed.

Such printing method allows for local application of the coating material 50 near the front end surface 11A of the crimped portion 14 without a separate masking process with high precision and high process speed.

In addition, the equipment required to be introduced for such printing process is only a flexible pad 80, a coating material 50, a cliché for pattern transcription of the coating material, and a pneumatic cylinder piston or gravure roll mold for performing the transcription process.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a battery can (10) having a side wall (11) extending in an axial direction; and an end wall (12) connected to a first lengthwise end of the side wall (11) extending in the axial direction;
an electrode assembly (20) accommodated in the battery can (10); and
a cap (40) covering an opening of the battery can (10),
wherein the opening is provided at a second lengthwise end of the side wall (11) opposite the first lengthwise end of the side wall (11),
a crimped portion (14) where a predetermined section of the side wall (11) bent radially inward is provided at the second lengthwise end so as to press an edge of an axially outer side surface of the cap (40) axially inward,
the crimped portion (14) defines an annular supporting surface (11F) protruding axially outer than the axially outer side surface of the cap (40), and
a front end surface (11A) disposed at a radially inner edge of the crimped portion (14) and provided at the second lengthwise end of the side wall (11) is covered with a coating material (50).

2. The battery cell of claim 1, wherein an outer circumferential surface of a front end (11B) of the crimped portion (14) defined by an outer circumferential surface of a predetermined axial section of the side wall (11) is inclined so as to extend axially inward from the supporting surface (11F) in a radially inward direction.

3. The battery cell of claim 2, wherein the supporting surface (11F) protrudes axially outer than the coating material (50).

4. The battery cell of claim 2, wherein the coating material (50) further covers: a front end centrifugal corner (11C) defined by a corner portion where the front end surface (11A) and the front end outer circumferential surface (11B) meet; and a first section (J) of the front end outer circumferential surface (11B) extending from the front end centrifugal corner (11C) in the lengthwise direction.

5. The battery cell of claim 4, wherein the front end centrifugal corner (11C) is disposed to protrude axially outer than the axially outer side surface of the cap (40).

6. The battery cell of claim 2, further comprising a gasket (30) interposed between the crimped portion (14) and the cap (40),
wherein the gasket (30) is provided with an exposed portion (30E) extending radially inner than a front end centripetal corner (11D) defined by a corner portion where the front end surface (11A) and an inner circumferential surface of the predetermined axial section of the side wall (11) meet, and
the coating material (50) further covers: the front end centripetal corner (11D) and a second section (K) of the exposed portion (30E) of the gasket (30) extending radially inward from the front end centripetal corner (11D).

7. The battery cell of claim 1, wherein the battery can (10) has a structure with a corrosion-resistant coated portion (10Ni) coated on a surface of a metal sheet (10St), and
the metal sheet (10St) is exposed in at least a portion of the front end surface (11A) of the side wall (11).

8. The battery cell of claim 1, wherein the coating material (50) includes a thermosetting resin or a thermosetting sealant.

9. The battery cell of claim 1, wherein the coating material (50) includes a resin having silicone-based polymer containing siloxanes with cross linking agent; and polymers and copolymers containing epoxy, acryl, imide, urethane and combinations thereof.

10. The battery cell of claim 1, wherein the coating material (50) includes a resin based on a cross linking agent formulation for rapid curing and photocuring initiation cross linking agent using ultraviolet rays and compositions thereof.

11. The battery cell of claim 1, wherein the electrode assembly (20) further includes a first electrode terminal (15) and a second electrode terminal electrically connected to the first electrode and the second electrode, respectively,
the first electrode terminal (15) is installed in the battery can (10) so as to be electrically insulated from the second electrode terminal, and
the second electrode terminal is provided in the battery can (10).

12. The battery cell of claim 11, wherein the second electrode terminal is defined at least by the end wall (12) of the battery can (10), and
the first electrode terminal (15) is installed at the end wall (12) so as to penetrate the end wall (12) in the axial direction.

13. A manufacturing method of a battery cell of any one of claims 1 to 12, the manufacturing method comprising:
a transcription step of transcribing a coating material (50) having a pattern corresponding to a front end surface (11A) onto a surface of a flexible pad (80); and
a reverse transcription step of reversely transcribing the coating material (50) transcribed on the surface of the flexible pad (80) onto the front end surface (11A).

14. The manufacturing method of claim 13, wherein the flexible pad (80) has a convex surface such that a center thereof protrudes more than an edge thereof.

15. The manufacturing method of claim 14, wherein the center of the flexible pad (80) is disposed against the axially outer side surface of the cap (40) such that the flexible pad (80) is pressed axially inward to elastically deform the flexible pad (80) in the reverse transcribing step.

16. The manufacturing method of claim 15, wherein a portion of the coating material (50) transcribed on the surface of the flexible pad reaches the front end surface (11A) through an elastic deformation of the flexible pad (80).

17. The manufacturing method of claim 13, wherein the coating material (50) includes a thermosetting resin or a thermosetting sealant, and
further comprising an activation process step of applying heat to the battery cell after the reverse transcribing step.
